# EUROPÄISCHE PATENTSCHRIFT

(11) **EP 3 787 960 B1**
(45) Veröffentlichungstag und Bekanntmachung des Hinweises auf die Patenterteilung: **06.10.2021**
(21) Anmeldenummer: 19758388.3
(22) Anmeldetag: 21.08.2019
(51) Int. Cl.: B62D 53/12

(54) **VERBINDUNGSSYSTEM UND VERBINDUNGSEINHEIT**
CONNECTION SYSTEM AND CONNECTION UNIT
SYSTÈME DE LIAISON ET UNITÉ DE LIAISON

(30) Priorität: 22.08.2018 DE 102018120470
(43) Veröffentlichungstag der Anmeldung: 10.03.2021
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2019/072345
(87) Internationale Veröffentlichungsnummer: WO 2020/038986

(56) Entgegenhaltungen:
- EP-A1- 1 655 212
- EP-A1- 1 900 620
- DE-A1-102006 020 069

## Beschreibung

Die vorliegende Verbindung betrifft ein Verbindungssystem und eine Verbindungseinheit zum Einsatz an einem Nutzfahrzeug.

Verbindungssysteme zur Versorgung von Anhängern von Sattelzügen mit Druckluft, elektrischer oder hydraulischer Energie sind aus dem Stand der Technik bereits bekannt. Die Verbindung der Leitungen am Zugfahrzeug mit den am Anhänger vorgesehenen Leitungen ist im Stand der Technik dabei bisher dadurch gelöst worden, dass manuell einzelne Stecker an Leitungen, welche meist dehnbar ausgelegt sind, zwischen Anhänger und Zugfahrzeug manuell gekoppelt werden. Alternativ hierzu wurden Lösungen für ein Verbindungssystem getestet, bei welchem ein erster Steckverbinder im Bereich der Kupplungsplatte festgelegt ist und ein weiterer Satz Steckverbinder an der Kupplung am Anhänger angeordnet ist und um die Längsachse, bzw. die Hochachse des Königszapfens schwenkbar angeordnet ist. Auf diese Weise konnte bei einer horizontalen Schrägstellung von Zugfahrzeug und Anhänger trotzdem eine sichere Verbindung zwischen dem Zugfahrzeug und dem Anhänger hergestellt werden. Bei den aus dem Stand der Technik bekannten Lösungen muss jedoch der Anhänger exakt in der korrekten Höhe relativ zum Zugfahrzeug angeordnet sein, um eine Steckverbindung zwischen dem am Zugfahrzeug angeordneten Stecker und dem am Anhänger angeordneten Stecker zu erlauben. Darüber hinaus tritt an den aus dem Stand der Technik bekannten Verbindungssystemen häufig hoher Verschleiß im Bereich der Steckkontakte auf. Weiterhin sind Lösungen bekannt, bei denen sämtliche Steckverbindungen im Königszapfen angeordnet sind, was jedoch eine aufwendige Stellmechanik erfordert, um nach dem Einkoppeln des Königszapfens die Steckverbindung zu schließen.

EP 1 655 212 A1 zeigt eine Verbindungseinheit an einer Sattelkupplung mit einer Trägereinheit und einer Steckereinheit. Die Trägereinheit ist an einem Zugfahrzeug festgelegt. Die Steckereinheit ist über ein mehrere Drehpunkte aufweisendes Gestängesystem so angelenkt, dass sie um eine Schwenkachse schwenkbar an der Trägereinheit gehalten ist. Die Steckereinheit weist einen Steckerkopf auf, welcher zur Kopplung mit einer weiteren Steckereinheit ausgelegt ist, und einen Kopplungsbereich eines elektrischen Leitungselements und/oder eines Flüssigkeitsübertragungselements aufweist. Der Kopplungsbereich weist entlang der Kopplungsachse einen konstanten Querschnitt auf. Die Kopplungsachse ist senkrecht zur Schwenkachse.

DE 10 2006 020 069 A1 zeigt eine Verbindungseinheit an einer Sattelkupplung, die eine Trägereinheit und eine Steckereinheit aufweist. Die Steckereinheit weist einen Steckerkopf auf, welcher zur Kopplung mit einer anderen Steckereinheit ausgelegt ist und zumindest einen Kopplungsbereich eines elektrischen Leitungselements und/oder zumindest eine Fluidübertragungsleitung aufweist. Der Kopplungsbereich weist einen entlang der Kopplungsachse konstanten Querschnitt auf.

Aufgabe der vorliegenden Erfindung ist es, ein Verbindungssystem für ein Nutzfahrzeug bereitzustellen, welches auch bei einem Höhenversatz zwischen Anhänger und Zugfahrzeug eine Verbindung erlaubt und welche den Materialverschleiß an dem Verbindungssystem reduziert.

Diese Aufgabe wird gelöst mit einem Verbindungssystem gemäß Anspruch 1 sowie einer Verbindungseinheit gemäß Anspruch 13. Weitere Vorteile und Merkmale der vorliegenden Erfindung ergeben sich aus den abhängigen Ansprüchen.

Erfindungsgemäß umfasst das Verbindungssystem eine erste Verbindungseinheit zur Festlegung an einem Zugfahrzeug und eine zweite Verbindungseinheit zur Festlegung an einem Auflieger, wobei die erste Verbindungseinheit eine erste Trägereinheit und eine erste Steckereinheit mit einer ersten Koppelachse aufweist, wobei die erste Steckereinheit schwenkbar um eine erste Schwenkachse an der ersten Trägereinheit gelagert ist, wobei die zweite Verbindungseinheit eine zweite Trägereinheit und eine zweite Steckereinheit mit einer zweiten Koppelachse aufweist, wobei die zweite Steckereinheit schwenkbar um eine zweite Schwenkachse an der zweiten Trägereinheit gelagert ist, wobei die erste und die zweite Steckereinheit jeweils zumindest einen Kopplungsbereich eines elektrischen Leitungselements und/oder zumindest einer Fluidübertragungsleitung aufweisen, wobei die zweite Verbindungseinheit am Auflieger derart schwenkbar um eine dritte Schwenkachse gelagert ist, dass sie in eine Koppelstellung bringbar ist, wobei in der Koppelstellung der zweiten Verbindungseinheit die zweite Schwenkachse parallel zur ersten Schwenkachse steht, wobei die erste Koppelachse im Wesentlichen kollinear zur zweiten Koppelachse ausgerichtet ist, wenn sich die erste und die zweite Steckereinheit in Koppelstellung befinden. Das Verbindungssystem weist somit zwei grundlegende Komponenten auf: Einen Teil, welcher am Zugfahrzeug angeordnet ist und hier als erste Verbindungseinheit definiert wird. Ein zweiter Teil des Verbindungssystems ist am Anhänger bzw. am Auflieger des Nutzfahrzeuges festgelegt und dabei insbesondere schwenkbar um eine dritte Schwenkachse, welche zweckmäßigerweise auch gleichzeitig die Zylinderachse, oder Hochachse, des Königszapfens ist, festgelegt. Die erste Verbindungseinheit weist dabei eine erste Trägereinheit und eine erste Steckereinheit auf, wobei die Steckereinheit schwenkbar um eine erste Schwenkachse an der ersten Trägereinheit festgelegt ist. Ebenso ist auch die zweite Verbindungseinheit mit einer zweiten Trägereinheit und einer zweiten Steckereinheit ausgestattet, wobei die zweite Steckereinheit schwenkbar um eine zweite Schwenkachse an der zweiten Trägereinheit festgelegt ist. Die zweite Trägereinheit weist dabei mit Vorteil zumindest zwei sich bezogen auf den Anhänger im Wesentlichen vertikal erstreckende plattenartige Befestigungsabschnitte auf, an welchen die zweite Steckereinheit schwenkbar um eine zweite Schwenkachse festgelegt ist. Alternativ oder zusätzlich zur plattenartigen Ausbildung kann die Trägereinheit auch einen Rahmen aufweisen. Die plattenartige Ausbindung dient dabei der schnellen Austauschbarkeit der Steckereinheiten. Mit anderen Worten schließt die zweite Trägereinheit die zweite Steckereinheit vorzugsweise an deren distalen Enden längs der zweiten Schwenkachse ein. Die erste und die zweite Steckereinheit weisen jeweils einen Kopplungsbereich, mit anderen Worten einen Steckbereich auf, welcher mit einem elektrischen Leitungselement oder mit einer Fluidübertragungsleitung verbunden ist. Mit Vorteil weist jede der Steckereinheiten eine Vielzahl von Kopplungsbereichen zur Verbindung von elektrischen Leitungen oder Fluidleitungen auf. Die Schwenkbarkeit der ersten Schwenkeinheit und der zweiten Schwenkeinheit unabhängig voneinander sorgt insbesondere dafür, dass mit der vorliegenden Erfindung ein Höhenversatz oder eine Schrägstellung um eine Querachse des Nutzfahrzeuges ausgeglichen werden kann. Eine solche Schrägstellung kann insbesondere auch dann entstehen, wenn das Zugfahrzeug mit seiner Hinterachse in einer Senke steht und somit der Verbund aus Zugfahrzeug und Auflieger von der Seite aus gesehen einen nach unten weisenden Knick aufweist. In diesem Zustand sorgt die Verschwenkbarkeit der ersten Verbindungseinheit und der zweiten Verbindungseinheit dafür, dass trotzdem beide Koppelachsen in Kollinearität zueinander gebracht werden können und somit ein einfaches und verschleißarmes Zusammenstecken der beiden Verbindungseinheiten möglich ist. Dabei werden insbesondere an den Verbindungseinheiten auftretende Biegekräfte und somit entstehende Biegespannungen verhindert und die Lebensdauer der Verbindungseinheit kann deutlich gesteigert werden. Die zweite Verbindungseinheit, welche am Auflieger festgelegt ist, ist dabei um eine dritte Schwenkachse drehbar bzw. schwenkbar gelagert, so dass auch bei einer Schrägstellung des Zugfahrzeuges zum Anhänger ein Ankoppeln möglich ist, indem die zweite Verbindungseinheit relativ zum Auflieger geschwenkt wird, um der ersten Verbindungseinheit genau gegenüberliegend angeordnet zu sein. Die Koppelstellung ist dabei die Stellung der ersten und der zweiten Steckereinheit, in welcher diese unmittelbar miteinander zusammengesteckt werden können oder bereits zusammengesteckt sind, wobei die Koppelachsen der beiden Steckereinheiten kollinear ausgerichtet sind. Gemäß einem Aspekt der Erfindung stehen dabei die Koppelachsen der jeweiligen Steckereinheit senkrecht oder orthogonal zur jeweiligen Schwenkachse der Steckereinheit , das heißt, dass die Steckereinheiten mittig, beispielsweise mittels einer Hülsen- oder Bolzenlagerung, an der jeweiligen Trägereinheit festgelegt sind, derart, dass die Koppelachse die Schwenkachse schneidet und dabei die Koppelachse orthogonal zur Schwenkachse ausgerichtet ist. Zweckmäßigerweise stehen die erste und zweite Schwenkachse der jeweiligen Steckereinheit senkrecht oder orthogonal zur dritten Schwenkachse der zweiten Verbindungseinheit.

Besonders bevorzugt ist zumindest eine der Steckereinheiten eine begrenzt schwimmend Lagerung aufweist. Hierdurch lassen sich durch kleine Versatzbewegungen entlang und/oder quer zur Schwenkachse der Steckereinheit ausgleichen und die Findung der Koppelstellung mit der jeweils gegenüberliegenden Steckereinheit wird erleichtert. Besonders bevorzugt ist dabei der Steckerkopf der Steckereinheit schwimmend, also mit einem Spiel im Millimeterbereich relativ zum Basisteil der Steckereinheit gelagert.

Mit Vorteil weist die erste Steckereinheit eine Ruhelage auf, wobei ein Rückstellmittel an der ersten Steckereinheit angreift und/oder der Schwerpunkt der ersten Steckereinheit derart beabstandet von der ersten Schwenkachse ist, dass eine in die Ruhelage führende Rückstellkraft an der ersten Steckereinheit anliegt oder angreift. Es ist bevorzugt die erste Steckereinheit, wenn diese nicht mit der zweiten Steckereinheit verbunden ist, in einer Ruhelage zu halten und dies insbesondere mittels eines Rückstellmittels der mithilfe der Wirkung der Schwerkraft zu erreichen.

Mit Vorteil ist dabei an der ersten Trägereinheit ein Anschlag vorgesehen, welcher die Schwenkbewegung der ersten Steckereinheit in einer ersten Richtung begrenzt oder abfedert. Dabei schlägt die Steckereinheit vorzugsweise am Anschlag an, wenn sie sich in der Ruhelage befindet. Der Anschlag ist mit Vorteil aus elastisch verformbarem und/oder dämpfendem Material ausgebildet, so dass er beim Anschlagen der Steckereinheit deren Bewegung zwar abfedert, aber nicht vollständig begrenzt.

Mit Vorteil weist auch die zweite Steckereinheit eine Ruhelage auf, wobei die erste Steckereinheit und/oder die zweite Steckereinheit mit einem maximalen Schwenkwinkel von 7° bis 40°, vorzugsweise von 10° bis 30° und besonders bevorzugt von 10° bis 30° aus der jeweiligen Ruhelage in zumindest einer Richtung schwenkbar sind. Es hat sich gezeigt, dass für die üblichen Kombinationen von Zugfahrzeug und Auflieger ein Winkelbereich von 7° bis 40° möglicher Verschwenkung einen guten Kompromiss zwischen einer Minimierung des von den Verbindungseinheiten beanspruchten Bauraums und einer möglichst vielseitigen Einsetzbarkeit des Verbindungssystems für verschiedene Zugfahrzeug-Auflieger-Kombinationen schafft. Der Winkelbereich von 10° - 30° hat sich insbesondere an Nutzfahrzeugen mit einem Gesamtgewicht von 40t bewährt, bei denen eine Höhenbegrenzung auch den an der Sattelkupplung zur Verfügung stehenden Bauraum reduziert. Der besonders bevorzugte Bereich von 10° bis 20° maximaler Auslenkung in einer Richtung ist insbesondere für Nutzfahrzeuge im reinen Straßeneinsatz bevorzugt, welche nicht in schwierigem Gelände kuppeln müssen und entsprechend von einer noch flacheren und kompakteren Sattelkupplung mit Verbindungssystem profitieren.

In einer bevorzugten Ausführungsform ist der Schwerpunkt der ersten Steckereinheit von der ersten Schwenkachse mit einem 0,1-0,5-Fachen, bevorzugt mit einem 0,1-0,3-Fachen, in der maximalen Länge der ersten Steckereinheit entlang der ersten Koppelachse gemessen, beabstandet. Durch eine ausreichende Beabstandung des Schwerpunktes der Steckereinheit von der ersten Schwenkachse und somit von dem Punkt, an welchem die erste Steckereinheit schwenkbar aufgehängt ist, kann eine ausreichende Rückstellkraft mithilfe der Schwerkraft auf die erste Steckereinheit wirken. Es hat sich gezeigt, dass der Abstand des Schwerpunktes von der ersten Schwenkachse zumindest mit einem 0,1-0,5-Fachen der Gesamterstreckung der ersten Steckereinheit entlang der Koppelachse bemessen sein sollte, um ein permanent ausreichend großes Drehmoment auf die erste Steckereinheit um die erste Schwenkachse zu übertragen, welches die erste Steckereinheit in die Ruhelage zurückführt. Besonders bevorzugt ist dabei der Verhältnisbereich von 0,1 bis 0,3, welcher eine nicht vollständig exzentrische Aufhängung der ersten Steckereinheit umsetzt, wobei insbesondere auch berücksichtigt wird, dass an einem distalen Ende der Steckereinheit eine Leitung angebracht ist, über welche Hydraulik oder pneumatischer Druck oder elektrische Spannung an die Steckereinheit übertragen wird.

Vorzugsweise ist in der Ruhelage der ersten Steckereinheit die erste Koppelachse parallel zur Aufstandsfläche des Zugfahrzeugs ausgerichtet. Weiterhin bevorzugt ist die Ruhelage der ersten Steckereinheit derart vorgesehen, dass die erste Koppelachse in der Ruhelage waagerecht relativ zum Boden, auf welchem das Zugfahrzeug steht, ausgerichtet ist. Dies ermöglicht es, dass für den mit der höchsten Wahrscheinlichkeit auftretenden Fall, dass eine Kopplung zwischen der ersten und zweiten Steckereinheit entlang einer parallel zum Boden stehenden Achse stattfindet, die erste Steckereinheit bereits in der richtigen Position ist.

Weiterhin bevorzugt weist die erste Steckereinheit zumindest einen ersten Steckerkopf auf, welcher Eingriffsmittel zum Eingriff mit der zweiten Steckereinheit aufweist. Der Steckerkopf der ersten Steckereinheit ist dabei vorzugsweise längs verlagerbar entlang der Koppelachse relativ zum Rest der ersten Steckereinheit ausgelegt und insbesondere dafür geeignet, über eine entsprechende Geometrie an der zweiten Steckereinheit übergestülpt zu werden. Hierfür weist der Steckerkopf als Eingriffsmittel bevorzugt eine zylindrische Bohrung auf, welche in einer vorzugsweise zylindrisch ausgebildeten Hülse angeordnet ist. Alternativ zur zylindrischen Bohrung könnten im Bereich des Steckerkopfes auch Führungsflächen vorgesehen sein, welche bspw. flach ausgebildete Kontakte an den Steckereinheiten in die korrekte Stellung zueinander leiten. Im Bereich des Steckerkopfes sind dabei insbesondere bevorzugt Kontakte für die Herstellung einer elektrischen Verbindung angeordnet und alternativ oder zusätzlich auch Dichtungselemente mit entsprechenden Strömungsquerschnitten zur Übertragung von Fluiddruck, insbesondere Hydraulik oder pneumatischem Druck an die zweite Steckereinheit.

Bevorzugt ist der erste Steckerkopf durch ein Rückstellmittel gegenüber einem ersten Basisteil der ersten Steckereinheit vorgespannt, wobei das Rückstellmittel eine federnde Verlagerung des ersten Steckerkopfes entlang der ersten Koppelachse relativ zum ersten Basisteil zulässt. Das Rückstellmittel ist besonders bevorzugt als Spiralfeder oder als Gummihülse ausgebildet. Eine Spiralfeder weist den Vorteil auf, dass sie einen besonders langen Rückstellweg bereitstellen kann und somit für eine große Verlagerungslänge des Steckerkopfes relativ zum ersten Basisteil entsprechend eine Rückstellkraft auf den Steckerkopf übertragen kann. Eine Gummihülse ist insbesondere dann bevorzugt, wenn zusätzlich zur Rückstellkraft auch eine Dämpfung der Bewegung des ersten Steckerkopfes erreicht werden soll. Die vorgespannte Lagerung des Steckerkopfes erlaubt es dabei, bei Relativbewegungen am gesamten Sattelkupplungssystem den Steckerkopf in permanentem Eingriff mit der zweiten Steckereinheit zu halten und somit eine sichere Übertragung von elektrischer Energie und/oder Fluiddruck zu erreichen.

In einer bevorzugten Ausführungsform ist die zweite Steckereinheit durch ein zweites Rückstellmittel mit einer Rückstellkraft beaufschlagt, welche die zweite Steckereinheit in eine Ruhelage relativ zur zweiten Trägereinheit führt, wobei die zweite Steckereinheit in beide Schwenkrichtungen um die zweite Schwenkachse gegen die jeweilige Rückstellkraft des zweiten Rückstellmittels verschwenkbar ist. Ähnlich zum Einsatz eines Rückstellmittels, um die erste Steckereinheit in Richtung der Ruhelage vorzuspannen, weist auch die zweite Steckereinheit ein Rückstellmittel auf, welches mit der zweiten Trägereinheit in Eingriff steht und die zweite Steckereinheit in Richtung ihrer Ruhelage verschwenkt. Dabei ist die zweite Steckereinheit, von der Ruhelage ausgehend, vorzugsweise in beide Schwenkrichtungen um die zweite Schwenkachse verschwenkbar, kann also sowohl nach oben als auch nach unten, bezogen auf den Auflieger, verschwenkt werden. Dies ermöglicht es, dass eine an einem Auflieger angebrachte zweite Verbindungseinheit auf verschiedene Zugfahrzeuge und entsprechend an diesen Zugfahrzeugen vorgesehene erste Verbindungseinheiten angepasst ist, da ohne Weiteres eine Verschwenkung nach oben als auch nach unten durch die zweite Steckereinheit durchgeführt werden kann. Mit Vorteil ist dabei die Ruhelage der zweiten Steckereinheit dadurch gekennzeichnet, dass die zweite Koppelachse in einer waagerechten bzw. parallel zur Aufstandsfläche des Aufliegers ausgerichtet ist.

Besonders bevorzugt ist die erste Verbindungseinheit unterhalb der Kupplungsplatte einer Sattelkupplung festgelegt und die zweite Verbindungseinheit ist vorzugsweise unmittelbar an oder angrenzend zu einem Königszapfen des Aufliegers festgelegt. Durch die Anordnung der ersten Verbindungseinheit unterhalb der Kupplungsplatte, kann zum einen eine besonders effiziente Ausnutzung des Bauraumes unterhalb der Kupplungsplatte erreicht werden. Zum anderen ist die erste Verbindungseinheit durch die Kupplungsplatte vor Umwelteinflüssen und Gewalteinwirkung durch Fremdkörper geschützt. Dabei ragt vorzugsweise der Steckerkopf der ersten Verbindungseinheit unterhalb der Kupplungsplatte derart in Richtung des Aufliegers hervor, dass die zweite Verbindungseinheit mit diesem in Eingriff gelangen kann. Die zweite Verbindungseinheit ist schwenkbar um eine dritte Schwenkachse vorzugsweise unmittelbar oder in unmittelbarer Nachbarschaft zum Königszapfen an dem Auflieger festgelegt. "angrenzend" oder "in unmittelbarer Nachbarschaft" bedeutet insbesondere einen Abstand kleiner 120 cm, vorzugsweise kleiner 90 cm, und besonders bevorzugt kleiner 60 cm zur dritten Schwenkachse. Mit der zweiten Verbindungseinheit verbunden kann dabei ein keilförmiges Element vorgesehen sein, welches in eine typischerweise vorgesehene V-förmige Aussparung an der Hinterseite der Kupplungsplatte eingreift und beim Ankuppeln des Aufliegers an das Zugfahrzeug die zweite Verbindungseinheit richtig zur ersten Verbindungseinheit ausrichtet, derart, dass ein Verbinden zwischen der ersten Verbindungseinheit und der zweiten Verbindungseinheit möglich wird.

Darüber hinaus bevorzugt weist die zweite Trägereinheit einen Führungsbereich auf, welcher eine Verlagerung der zweiten Steckereinheit quer zur zweiten Schwenkachse entlang einer Führungsbahn erlaubt und die zweite Steckereinheit gegen Verlagerung quer zur Führungsbahn sichert. Der Führungsbereich der zweiten Trägereinheit weist vorzugsweise eine längliche Erstreckung auf und erlaubt die zweite Steckereinheit entlang einer durch den Führungsbereich definierten Führungsbahn zu verlagern. Die Führungsbahn weist dabei vorzugsweise überwiegend senkrechte Erstreckung auf, das heißt der in vertikaler Richtung verlaufende Erstreckungsanteil der Führungsbahn ist größer als der in horizontaler oder waagrechter Richtung verlaufende Erstreckungsanteil. Indem die zweite Steckereinheit entlang der Führungsbahn verlagert wird, kann diese in die richtige Höhe zum optimalen Einkuppeln mit der ersten Steckereinheit gebracht werden. Diese unterstützt zusätzlich zur Verschwenkbarkeit der zweiten Steckereinheit ein möglichst kollineares Ausrichten der beiden Kopplungsachsen zueinander. Hierdurch ist es möglich, dass der unmittelbare Kopplungsvorgang selbst, das heißt der Vorgang, mit welchem die beiden Steckereinheiten zusammengesteckt werden, reibungsarm verlaufen kann und minimale Biegespannungen an den jeweiligen korrespondierenden Geometrien der beiden Steckereinheiten auftreten.

Besonders bevorzugt ist der Führungsbereich dabei als Langloch ausgebildet und die Führungsbahn ist entsprechend eine Gerade. Eine Ausbildung als Langloch ist besonders einfach herstellbar und die zweite Steckereinheit kann mittels einer bolzenförmigen Eingriffsgeometrie an dem Führungsbereich geführt sein.

Weiterhin bevorzugt ist an der ersten Trägereinheit oder an der zweiten Trägereinheit eine Einführhilfe mittelbar oder unmittelbar festgelegt, welche die jeweils gegenüberliegende Steckereinheit während des Kopplungsvorganges derart verschwenkt, dass die Kopplungsachsen in Kollinearität miteinander gelangen. Die Einführhilfe ist vorzugsweise ein blechartig ausgeführtes Bauteil oder ein Vorsprung, welcher entsprechend derart mit der ersten oder der zweiten Steckereinheit zusammenwirkt, dass beim Zusammenkuppeln des Zugfahrzeuges und des Aufliegers die Steckereinheit an der Einführhilfe entlanggleitet und dabei in die richtige Stellung relativ zur jeweils gegenüberliegenden Steckereinheit verschwenkt wird. Auf diese Weise gewährleistet die Einführhilfe, dass zum Zusammenkuppeln der Steckereinheiten Kollinearität zwischen den beiden Kopplungsachsen hergestellt werden kann. Hierbei ist auch die bevorzugte schwimmende Lagerung zumindest einer der Steckereinheiten von Vorteil, welche einen Ausgleich von Versatz der Koppelachsen voneinander erlaubt.

Während bisher das Verbindungssystem, bestehend aus zwei Verbindungseinheiten, eine davon am Zugfahrzeug und die andere am Auflieger, beschrieben wurde, ist im Rahmen der Erfindung auch eine Verbindungseinheit zum Einsatz an einer Sattelkupplung vorgesehen, umfassend eine Trägereinheit und eine Steckereinheit, wobei die Trägereinheit an einem Zugfahrzeug oder an einem Auflieger festlegbar oder festgelegt ist und wobei die Steckereinheit schwenkbar um eine Schwenkachse an der Trägereinheit gelagert ist, wobei die Steckereinheit zumindest einen Steckerkopf aufweist, welcher zur Kopplung mit einer weiteren Steckereinheit ausgelegt ist und zumindest einen Kopplungsbereich eines elektrischen Leitungselements und/oder zumindest einer Fluidübertragungsleitung aufweist, wobei der Kopplungsbereich einen entlang einer Koppelachse konstanten Querschnitt aufweist, wobei die Koppelachse senkrecht zur Schwenkachse steht. Wie zuvor beschrieben weist die Verbindungseinheit eine Trägereinheit und eine Steckereinheit auf, wobei die Trägereinheit an einem Zugfahrzeug oder an einem Auflieger festgelegt ist. Im Fall, dass die Trägereinheit an dem Auflieger festgelegt ist, ist es bevorzugt, dass diese zusätzlich um eine zusätzliche Schwenkachse um den Königszapfen des Aufliegers verschwenkbar gelagert ist. Zumindest aber ist die Steckereinheit der Verbindungseinheit schwenkbar um eine Schwenkachse an der Trägereinheit gelagert, derart, dass ein Höhenunterschied zwischen der Schwenkachse der hier vorgesehenen Steckereinheit und einer gegenüberliegenden Steckereinheit ausgeglichen werden kann. Darüber hinaus weist die Steckereinheit zumindest einen Steckerkopf auf, welcher zur Kopplung mit einer weiteren Steckereinheit ausgelegt ist und zumindest einen Kopplungsbereich eines elektrischen Leitungselementes oder einer Fluidleitung aufweist. Im Fall, dass der Kopplungsbereich der Übertragung von elektrischer Spannung dient, ist er vorzugsweise mit Kontakten ausgestattet, welche eine Übertragung von zumindest einem, vorzugsweise mehreren Leitungselementen, ermöglichen. Im Fall, dass der Kopplungsbereich zur Fluidübertragung ausgelegt ist, sind vorzugsweise Eingriffsgeometrien zum formschlüssigen Eingriff und Festlegen der Fluidübertragungsleitung und entsprechend in diesen Eingriffsmitteln angeordnete Dichtungselemente vorgesehen, welche eine sichere Übertragung von Fluiddruck vom Zugfahrzeug an den Auflieger ermöglichen. In einer bevorzugten Ausführungsform weist die Steckereinheit eine Vielzahl von Steckerköpfen auf, welche zueinander nicht verschwenkbar vorgesehen sind, aber gemeinsam um die Schwenkachse verschwenkt werden können.

Vorzugsweise ist die Trägereinheit relativ zu dem Zugfahrzeug oder dem Auflieger um eine dritte Schwenkachse an diesem festlegbar. Die Verschwenkung der Trägereinheit um eine dritte Schwenkachse ermöglicht es insbesondere bei einer Schrägstellung des Zugfahrzeuges zum Auflieger trotzdem eine Ankopplung durchführen zu können, bei welcher gleichzeitig auch die Verbindungseinheit in Eingriff mit einer gegenüberliegenden Verbindungseinheit gelangt. Hierzu wird die Verbindungseinheit vorzugsweise um eine vertikale Achse, also die dritte Schwenkachse relativ zum Zugfahrzeug oder Auflieger verschwenkt, derart, dass diese mit einem gegenüberliegenden Teil der Verbindungseinheit in Eingriff gelangen kann.

In einer weiteren bevorzugten Ausführungsform ist der Steckerkopf durch ein Rückstellmittel gegenüber einem Basisteil der Steckereinheit vorgespannt, wobei das erste Rückstellmittel eine federnde Verlagerung des Steckerkopfes entlang der Koppelachse relativ zum ersten Basisteil zulässt.

Mit Vorteil ist an der Trägereinheit ein Anschlag vorgesehen, wobei die Steckereinheit in ihrer Ruhelage am Anschlag anliegt. Der Anschlag ist mit Vorteil als Vorsprung oder blechartiges Bauteil ausgebildet, welches die Verschwenkung der Steckereinheit in einer Richtung derart begrenzt, dass, wenn die Steckereinheit in ihrer Ruhelage angelangt ist, diese am Anschlag zur Anlage kommt. Die Steckereinheit kann dabei durch Wirkung der Schwerkraft oder durch ein Rückstellmittel in Richtung ihrer Ruhelage vorgespannt sein.

Weitere Vorteile und Aspekte der vorliegenden Erfindung ergeben sich aus der nachfolgenden Beschreibung mit Bezug auf die beigefügten Figuren. Es versteht sich dabei, dass einzelne nur in einer der Darstellungen gezeigte Merkmale auch in anderen Ausführungsformen zum Einsatz gelangen können, sofern dies nicht explizit ausgeschlossen wird oder sich aufgrund technischer Gegebenheiten verbietet.

Es zeigen:
- Fig. 1: eine teilweise geschnittene Ansicht eines Verbindungssystems,
- Fig. 2: eine teilweise geschnittene Ansicht eines Verbindungssystems im Zusammengekoppelten Zustand;
- Fig. 3: eine geschnittene Ansicht einer weiteren Ausführungsform eines Verbindungssystems im zusammengekoppelten Zustand;
- Fig.4: eine Draufsicht auf eine bevorzugte Ausführungsform einer zweiten Verbindungseinheit;
- Fig. 5: eine Detailansicht einer bevorzugten Ausführungsform der zweiten Verbindungseinheit, und
- Fig. 6: eine Ansicht einer bevorzugten Ausführungsform einer Steckereinheit.

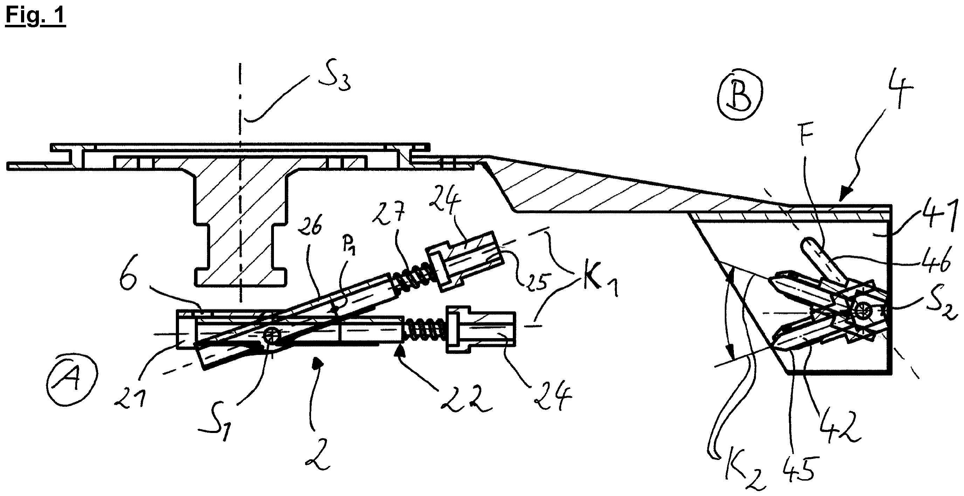

Bei der in Fig. 1 gezeigten bevorzugten Ausführungsform des erfindungsgemäßen Verbindungssystems ist eine erste Verbindungseinheit 2 an einer nicht gezeigten Sattelkupplungsplatte einer Sattelkupplung festgelegt und eine zweite Verbindungseinheit 4 im Bereich des geschnitten dargestellten Königszapfens festgelegt. Die erste Verbindungseinheit 2 weist dabei eine erste Trägereinheit 21 auf, an welcher schwenkbar um eine erste Schwenkachse eine erste Steckereinheit 22 festgelegt ist. Die erste Steckereinheit 22 weist einen Basisabschnitt 26 und einen Steckerkopf 24 auf, wobei der Steckerkopf längs der ersten Koppelachse K₁ durch ein erstes Rückstellmittel 27 vorgespannt ist. Das erste Rückstellmittel 27 ist in dieser bevorzugten Ausführungsform als Spiralfeder ausgebildet und dient insbesondere dazu, den Steckerkopf 24 vom ersten Basisabschnitt 26 zu beabstanden. Die erste Steckereinheit 22 weist dabei ihre größte Erstreckung und somit ihre Länge parallel zur ersten Koppelachse K₁ auf. In Fig. 1 ist die erste Steckereinheit 22 dabei in zwei Positionen dargestellt: Einmal in ihrer Ruhelage, in welcher die erste Koppelachse K₁ im Wesentlichen waagrecht ausgerichtet ist, und zum anderen in einer verschwenkten Position, bei welcher die Koppelachse K₁ um einen Winkel von ca. 20-30° aus der Waagrechten heraus nach oben verschwenkt ist. An der vom Steckerkopf 24 abgewandten Seite der ersten Steckereinheit 22 ist ein Anschlag 6 vorgesehen, an welchem die Steckereinheit 22 zur Anlage kommt, wenn diese sich in ihrer Ruhelage befindet. Bei dieser bevorzugten Ausführungsform kann die erste Steckereinheit 22 somit nicht aus der Waagrechten heraus nach unten verschwenkt werden, bzw. ist in einer zumindest waagrechten Position gehalten. Hierdurch ist es besonders bevorzugt möglich, dass eine waagrechte Kopplung mit einer zweiten Steckereinheit 4, welche am Auflieger B festgelegt ist, ohne Verschwenkbewegung stattfinden kann. Weiterhin gezeigt ist auch der Schwerpunkt P₁ der ersten Steckereinheit 22, welcher in der Figur nach rechts versetzt von der ersten Schwenkachse S₁ beabstandet ist.

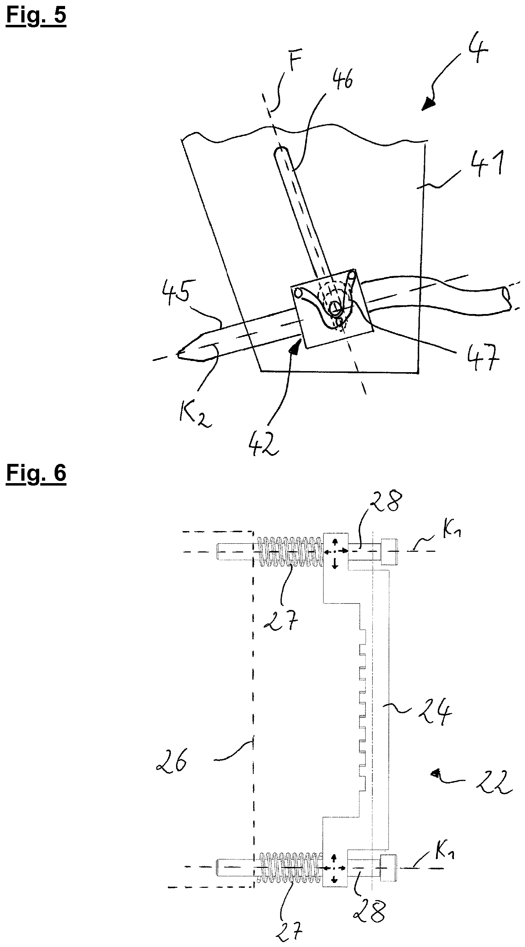

Die Gewichtskraft der ersten Steckereinheit 22 wirkt vereinfacht betrachtet in diesem Punkt und verschwenkt somit die erste Steckereinheit 22 in Richtung ihrer Ruhelage, also in Richtung einer waagrechten Stellung. Der Anschlag 6 ist mit Vorteil an der ersten Trägereinheit 21 festgelegt oder einstückig mit dieser ausgeführt. Die zweite Steckereinheit 42 ist ebenfalls in zwei Verschwenkpositionen gezeigt, wobei die zweite Steckereinheit 42 sowohl nach oben als auch nach unten verschwenkbar ist und eine Ruhelage der zweiten Steckereinheit 42 über ein Rückstellelement eingestellt wird (siehe hierzu Fig. 5). An der zweiten Trägereinheit 41 ist eine Führungsgeometrie 46 ausgebildet, welche eine Verlagerung der zweiten Steckereinheit 42 entlang einer Führungsbahn F erlaubt. Im vorliegend gezeigten Beispiel ist die Führungsbahn F eine Gerade und die Führungsgeometrie 46 ist als Langloch in dem blechartig ausgebildeten vertikal stehenden Teil der Trägereinheit 41 ausgebildet. Die Führungsgeometrie 46 erlaubt dabei eine Transversalbewegung der zweiten Steckereinheit 42 schräg nach oben oder schräg nach unten, wobei insbesondere der vertikale Anteil dieser Verlagerung dazu beiträgt, die zweite Steckereinheit 42 derart relativ zur ersten Steckereinheit 22 verschieben zu können, dass der Steckerkopf 24 mit dem zweiten Kopplungsbereich 45 an der zweiten Steckereinheit 42 in Eingriff gelangen kann, ohne dass hierbei nennenswerte Querkräfte, das heißt Kräfte quer zu den Koppelachsen K₁ und K₂ auftreten. Bei der in Fig. 1 gezeigten Ausführungsform ist die erste Schwenkachse S₁ dabei vorzugsweise in annähernd gleicher Höhe bezogen auf die Horizontale angeordnet wie die zweite Schwenkachse S₂. Dies führt dazu, dass nur eine geringe Verschwenkung der ersten Steckereinheit 22 und der zweiten Steckereinheit 42 notwendig ist, um eine entsprechende kollineare Ausrichtung der ersten Koppelachse K₁ zur zweiten Koppelachse K₂ zu erreichen.

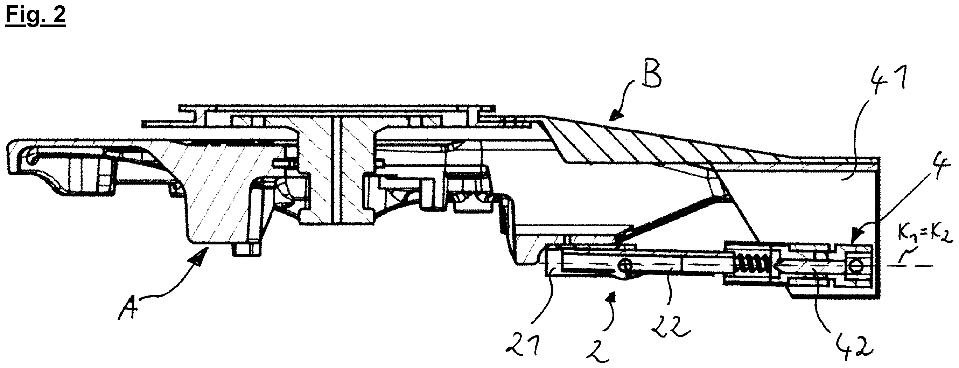

Fig. 2 schließlich zeigt die in Fig. 1 gezeigte Ausführungsform des erfindungsgemäßen Verbindungssystems im zusammengekoppelten Zustand. Dabei ist die erste Koppelachse K₁ kollinear zur zweiten Koppelachse K₂ ausgerichtet und der Steckerkopf 24 der ersten Steckereinheit 22 steht mit dem Kopplungsbereich 45 an der zweiten Steckereinheit 42 in Eingriff. Mit Vorteil befindet sich die erste Steckereinheit 22 dabei in ihrer Ruhelage, das heißt im vorliegenden Beispiel im Wesentlichen in einer waagrechten Stellung, und liegt an ihrem Anschlag 6 an.

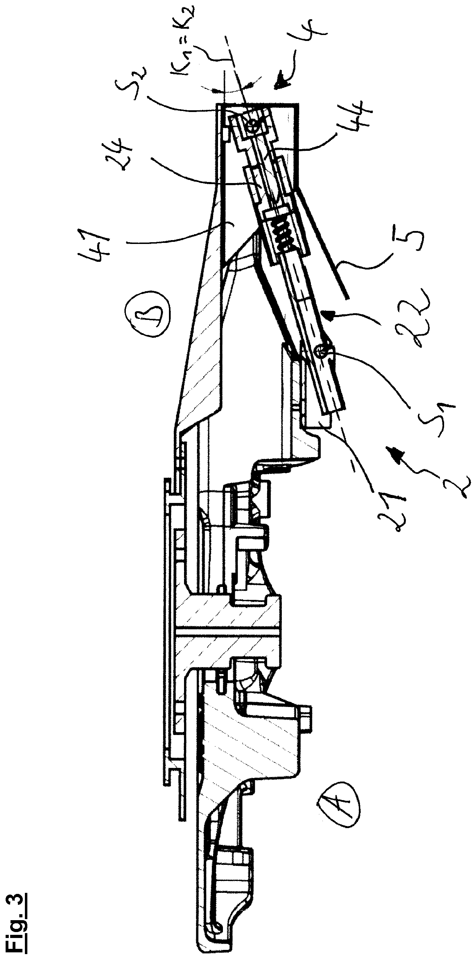

Fig. 3 zeigt eine Alternative zu der in den Figuren 1 und 2 gezeigten Ausführungsform, wobei zur Kopplung der ersten und der zweiten Steckereinheit 22, 42 insbesondere eine schräge Ausrichtung der ersten und der zweiten Koppelachse K₁, K₂ vorgesehen ist. Die erste Verbindungseinheit 2 ist dabei identisch zu der in den Figuren 1 und 2 gezeigten ersten Verbindungseinheit 2 aufgebaut und angeordnet. Die zweite Verbindungseinheit 4 weist eine zweite Trägereinheit 41 auf, die eine geringere Erstreckung in vertikaler Richtung aufweist. Mit Vorteil ist bei dieser Ausführungsform eine Einführhilfe 5 an der zweiten Verbindungseinheit 4, insbesondere einstückig unmittelbar an der zweiten Trägereinheit 41 festgelegt. Es wird beim Einkoppeln des Zugsattelzapfens des Aufliegers B die erste Steckereinheit 22 entlang der Einführhilfe 5 derart nach oben geschwenkt, dass diese in Eingriff mit der zweiten Steckereinheit 42 gelangen kann. Eine ähnliche Einführhilfe ist bevorzugt auch am Zugfahrzeug A angeordnet sein und dafür sorgen, dass die zweite Steckereinheit 42 der Ausführungsformen der Figuren 1 - 3 entsprechend nach unten verschwenkt wird, so dass letztendlich eine kollineare Ausrichtung der ersten Koppelachse K₁ und der zweiten Koppelachse K₂ erreicht ist, und die erste und die zweiten Steckereinheit 22, 42 möglichst widerstands- und spannungsarm ineinander gefügt werden können.

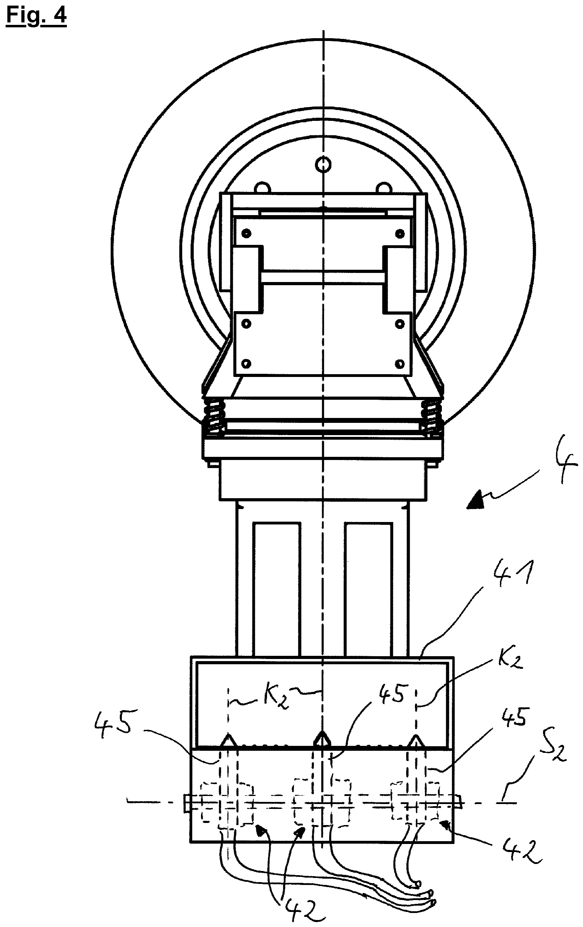

Fig. 4 zeigt eine Draufsicht auf eine bevorzugte Ausführungsform der zweiten Verbindungseinheit 4, wobei erkennbar ist, dass die zweite Verbindungseinheit 4 mit Vorteil drei zweite Steckereinheiten 42 aufweist, welche mit entsprechend je einem Kopplungsbereich 45 ausgestattet sind. Die zweiten Steckereinheiten 42 sind dabei vorzugsweise zusammenhängend um die zweite Schwenkachse S₂ schwenkbar und ermöglichen es, mehrere Verbindungen zur ersten Verbindungseinheit 2 (hier nicht gezeigt) herzustellen und eine Vielzahl von einzelnen Leitungselementen zu verbinden. Es versteht sich, dass neben der in Fig. 4 gezeigten Ausführungsform weitere Ausführungsformen bevorzugt sein können, bei welcher zumindest zwei, mit Vorteil bis zu sechs, Steckereinheiten sowohl an der ersten Verbindungseinheit als auch an der zweiten Verbindungseinheit vorgesehen sein können, um eine Vielzahl von elektrischen Signalen, elektrische Signale und Leistung, sowie Fluiddruck übertragen zu können.

Fig. 5 zeigt eine Detailansicht auf eine bevorzugte Ausführungsform der zweiten Verbindungseinheit 4 bei welcher die zweite Steckereinheit 42 über ein zweites Rückstellmittel 47 in ihrer in Fig. 5 gezeigten Ruhelage vorgespannt und gehalten ist, wobei eine Schwenkbewegung der zweiten Steckereinheit 42 sowohl nach oben als auch nach unten möglich ist und dabei das zweite Rückstellmittel 47 eine entsprechende Rückstellkraft entwickelt. Mit Vorteil stützt sich das zweite Rückstellmittel 47 dabei an der Innenseite der Führungsgeometrie 46 ab und überträgt über zwei entsprechend federnde Abschnitte jeweils eine rückstellende Kraft auf die schematisch viereckig dargestellte Geometrie der zweiten Steckereinheit 42. In einer alternativen Ausführungsform, welche hier nicht gezeigt ist, kann das zweite Rückstellmittel 47 auch als Gummielement ausgebildet sein, welches einen länglich ausgebildeten Abschnitt aufweist, welcher wiederum mit der Führungsgeometrie 46 in Eingriff gelangen kann und entsprechend über eine elastische Verformung des Gummielementes bei Verschwenken der zweiten Steckereinheit 42 relativ zur Führungsgeometrie 46 und somit relativ zur Trägereinheit 41 eine entsprechende Rückstellkraft entwickelt. Ein Gummielement hat den Vorteil, dass dies zudem noch eine dämpfende Wirkung auf eine Schwenkbewegung der zweiten Steckereinheit haben kann.

Fig. 6 zeigt eine Detailansicht der schwimmenden Lagerung an einer der Steckereinheiten 22, 42. Beispielhaft ist hier die erste Steckereinheit 22 gezeigt, welche unterhalb der Sattelkupplungsplatte am Zugfahrzeug A angeordnet und festgelegt ist. Dabei ist der in Fig. 1 gezeigte Steckerkopf 24 in dieser Ansicht von oben aus gesehen dargestellt, welcher über zwei Führungsbolzen 28 am Basisteil 26 (gestrichelt angedeutet) gelagert ist. Zwischen den Aufnahmebohrungen am Steckerkopf 24 und den Führungsbolzen 28 ist dabei ein Spiel von 1 mm bis 5 mm vorgesehen, was einen Versatz des Steckerkopfes 24 quer zur ersten Koppelachse K₁ erlaubt und so eine Kopplung mit der gegenüberliegenden Steckereinheit 42 erleichtert, wenn diese leicht schräg und/oder versetzt steht. Dabei kann auch eine leichte Verdrehung um die Längsachse des Zugfahrzeuges im Millimeterbereich, bzw. bis zu 2° Auslenkung, stattfinden. Mit Vorteil wird mittels der schwimmenden Lagerung des Steckerkopfes 24 die zuvor beschriebene begrenzt schwimmende Lagerung an der Steckereinheit, im vorliegenden Beispiel an der ersten Steckereinheit 22, verwirklicht.

**Bezugszeichen**

| | | | |
|---|---|---|---|
| 2 | - erste Verbindungseinheit | 47 | - zweites Rückstellmittel |
| 21 | - erste Trägereinheit | 5 | - Einführhilfe |
| 22 | - erste Steckereinheit | 6 | - Anschlag |
| 24 | - erster Steckerkopf | A | - Zugfahrzeug |
| 25 | - erster Kopplungsbereich | B | - Auflieger |
| 26 | - erster Basisteil | F | - Führungsbahn |
| 27 | - erstes Rückstellmittel | K₁ | - erste Koppelachse |
| 28 | - Führungsbolzen | K₂ | - zweite Koppelachse |
| 4 | - zweite Verbindungseinheit | P₁ | - erster Schwerpunkt |
| 41 | - zweite Trägereinheit | S₁ | - erste Schwenkachse |
| 42 | - zweite Steckereinheit | S₂ | - zweite Schwenkachse |
| 45 | - zweiter Kopplungsbereich | S₃ | - dritte Schwenkachse |
| 46 | - Führungsgeometrie | | |

## Patentansprüche

1. Verbindungssystem zum Einsatz an einer Sattelkupplung,
umfassend eine erste Verbindungseinheit (2) zur Festlegung an einem Zugfahrzeug (A) und eine zweite Verbindungseinheit (4) zur Festlegung an einem Auflieger (B),
wobei die erste Verbindungseinheit (2) eine erste Trägereinheit (21) und eine erste Steckereinheit (22) mit einer ersten Koppelachse (K₁) aufweist, wobei die erste Steckereinheit (22) schwenkbar um eine erste Schwenkachse (S₁) an der ersten Trägereinheit (21) gelagert ist,
wobei die zweite Verbindungseinheit (4) eine zweite Trägereinheit (41) und eine zweite Steckereinheit (42) mit einer zweiten Koppelachse (K₂) aufweist, wobei die zweite Steckereinheit (42) schwenkbar um eine zweite Schwenkachse (S₂) an der zweiten Trägereinheit (41) gelagert ist,
wobei die erste und die zweite Steckereinheit (22, 42) jeweils zumindest einen Kopplungsbereich (25, 45) eines elektrischen Leitungselements und/oder zumindest einer Fluidübertragungsleitung aufweisen,
**dadurch gekennzeichnet, dass** die zweite Verbindungseinheit (4) am Auflieger derart schwenkbar um eine dritte Schwenkachse (S₃) gelagert ist, dass sie in eine Koppelstellung bringbar ist, wobei in der Koppelstellung der zweiten Verbindungseinheit (4) die zweite Schwenkachse (S₂) parallel zur ersten Schwenkachse (S₁) steht,
wobei die erste Koppelachse (K₁) im Wesentlichen kollinear zur zweiten Koppelachse (K₂) ausgerichtet ist, wenn sich die erste und die zweite Steckereinheit (22, 42) in Koppelstellung befinden.

2. Verbindungssystem nach Anspruch 1,
wobei die erste Steckereinheit (22) eine Ruhelage aufweist,
wobei ein Rückstellmittel an der ersten Steckereinheit (22) angreift und/oder der Schwerpunkt (P₁) der ersten Steckereinheit (22) derart beabstandet von der ersten Schwenkachse (S₁) ist, dass eine in die Ruhelage führende Rückstellkraft an der ersten Steckereinheit (22) anliegt.

3. Verbindungssystem nach Anspruch 2,
wobei die zweite Steckereinheit (42) eine Ruhelage aufweist,
wobei die erste Steckereinheit (22) und/oder die zweite Steckereinheit (42) mit einem maximalen Schwenkwinkel von 7° bis 40°, vorzugsweise von 10° bis 30° und besonders bevorzugt von 10° bis 20° aus der Ruhelage in zumindest einer Richtung schwenkbar sind.

4. Verbindungssystem nach Anspruch 2 oder 3,
wobei der Schwerpunkt (P₁) der ersten Steckereinheit (22) von der ersten Schwenkachse (S₁) mit einem 0,1- bis 0,5-fachen, bevorzugt mit einem 0,1- bis 0,3-fachen der maximalen Länge der ersten Steckereinheit (22), entlang der ersten Koppelachse (K₁) gemessen, beabstandet ist.

5. Verbindungssystem nach einem der vorhergehenden Ansprüche,
wobei zumindest eine der Steckereinheiten (22, 42) eine begrenzt schwimmende Lagerung aufweist.

6. Verbindungssystem nach einem der Ansprüche 2 bis 5,
wobei in der Ruhelage der ersten Steckereinheit (22) die erste Koppelachse (K₁) parallel zur Aufstandsfläche des Zugfahrzeugs (A) ausgerichtet ist.

7. Verbindungssystem nach einem der vorhergehenden Ansprüche,
wobei die erste Steckereinheit (22) zumindest einen ersten Steckerkopf (24) aufweist, welcher Eingriffsmittel zum Eingriff mit der zweiten Steckereinheit (42) aufweist,
wobei der erste Steckerkopf (24) durch ein Rückstellmittel (27) gegenüber einem ersten Basisteil (26) der ersten Steckereinheit (22) vorgespannt ist, wobei das Rückstellmittel (27) eine federnde Verlagerung des ersten Steckerkopfes (24) entlang der ersten Koppelachse (K₁) relativ zum ersten Basisteil (26) zulässt.

8. Verbindungssystem nach einem der vorhergehenden Ansprüche,
wobei die zweite Steckereinheit (42) durch ein zweites Rückstellmittel (47) mit einer Rückstellkraft beaufschlagt ist, welche die zweite Steckereinheit (42) in eine Ruhelage relativ zur zweiten Trägereinheit (41) führt,
wobei die zweite Steckereinheit (42) in beide Schwenkrichtungen um die zweite Schwenkachse (S₂) gegen die jeweilige Rückstellkraft des zweiten Rückstellelements verschwenkbar ist.

9. Verbindungssystem nach einem der vorhergehenden Ansprüche,
wobei die erste Verbindungseinheit (2) unterhalb der Kupplungsplatte einer Sattelkupplung festgelegt ist, und
wobei die zweite Verbindungseinheit (4) unmittelbar oder angrenzend an einem Königszapfen des Aufliegers (B) festgelegt ist.

10. Verbindungssystem nach einem der vorhergehenden Ansprüche,
wobei die zweite Trägereinheit (41) einen Führungsbereich (46) aufweist, welcher eine Verlagerung der zweiten Steckereinheit (42) quer zur zweiten Schwenkachse (S₂) entlang einer Führungsbahn (F) erlaubt und die zweite Steckereinheit (42) gegen Verlagerung quer zur Führungsbahn (F) sichert.

11. Verbindungssystem nach Anspruch 10,
wobei der Führungsbereich (46) als Langloch ausgebildet ist und die Führungsbahn (F) eine Gerade ist.

12. Verbindungssystem nach einem der vorhergehenden Ansprüche,
wobei an der ersten Trägereinheit (21) und/oder der zweiten Trägereinheit (41) eine Einführhilfe (5) mittelbar oder unmittelbar festgelegt ist, welche die jeweils gegenüberliegende Steckereinheit (42, 41) während des Kopplungsvorganges derart verschwenkt , dass die Koppelachsen (K₁, K₂) in Kollinearität miteinander gelangen.

13. Verbindungseinheit (2, 4) zum Einsatz an einer Sattelkupplung, umfassend eine Trägereinheit (21, 41) und eine Steckereinheit (22, 42),
wobei die Trägereinheit (21, 41) an einem Zugfahrzeug (A) oder an einem Auflieger (B) festlegbar oder festgelegt ist,
wobei die Steckereinheit (22, 42) schwenkbar um eine Schwenkachse (S₁, S₂) an der Trägereinheit (21, 41) gelagert ist,
wobei die Steckereinheit (22, 42) zumindest einen Steckerkopf (24, 44) aufweist, welcher zur Kopplung mit einer weiteren Steckereinheit ausgelegt ist und zumindest einen Kopplungsbereich (25, 45) eines elektrischen Leitungselements und/oder zumindest einer Fluidübertragungsleitung aufweist,
wobei der Kopplungsbereich (25, 45) einen entlang einer Koppelachse (K₁, K₂) konstanten Querschnitt aufweist,
**dadurch gekennzeichnet, dass** die Koppelachse (K₁, K₂) senkrecht zur Schwenkachse (S₁, S₂) steht, und wobei die Steckereinheit (22, 42) so an der Trägereinheit (21, 41) festgelegt ist, dass die Koppelachse (K₁, K₂) die Schwenkachse (S₁, S₂) schneidet.

14. Verbindungseinheit (2, 4) nach Anspruch 13,
wobei der Steckerkopf (24) durch ein erstes Rückstellmittel (27) gegenüber einem Basisteil (26) der Steckereinheit (22) vorgespannt ist,
wobei das erste Rückstellmittel (27) eine federnde Verlagerung des Steckerkopfes (24) entlang der Koppelachse (K₁) relativ zum ersten Basisteil (26) zulässt.

15. Verbindungseinheit (2, 4) nach einem der Ansprüche 13 oder 14,
wobei an der Trägereinheit (21, 41) ein Anschlag (6) vorgesehen ist,
wobei die Steckereinheit (22, 42) in ihrer Ruhelage am Anschlag (6) anliegt.

## Claims

1. A connection system for use on a fifth-wheel coupling,
comprising a first connection unit (2) for fixing to a towing vehicle (A) and a second connection unit (4) for fixing to a semi-trailer (B),
wherein the first connection unit (2) comprises a first carrier unit (21) and a first plug-in unit (22) having a first coupling axis (K₁),
wherein the first plug-in unit (22) is mounted on the first carrier unit (21) so as to be able to pivot about a first pivot axis (S₁),
wherein the second connection unit (4) comprises a second carrier unit (41) and a second plug-in unit (42) having a second coupling axis (K₂), wherein the second plug-in unit (42) is mounted on the second carrier unit (41) so as to be able to pivot about a second pivot axis (S₂),
wherein the first plug-in unit (22) and the second plug-in unit (42) respectively comprise at least one coupling region (25, 45) of an electrical line element and/or at least one fluid-conveying line,
**characterized in that** the second connection unit (4) is mounted on the semi-trailer so to be able to pivot about a third pivot axis (S₃) in such a manner that said connection unit can be moved into a coupling position, wherein when the second connection unit (4) is in the coupling position the second pivot axis (S₂) extends parallel to the first pivot axis (S₁),
wherein the first coupling axis (K₁) is oriented essentially in a collinear manner with respect to the second coupling axis (K₂) if the first plug-in unit (22) and the second plug-in unit (42) are located in the coupling position.

2. The connection system as claimed in claim 1,
wherein, the first plug-in unit (22) comprises an idle position,
wherein a restoring means engages with the first plug-in unit (22) and/or the center of gravity (P₁) of the first plug-in unit (22) is spaced apart from the first pivot axis (S₁) in such a manner that a restoring force that leads to the idle position is prevailing at the first plug-in unit (22).

3. The connection system as claimed in 2,
wherein the second plug-in unit (42) also comprises an idle position,
wherein the first plug-in unit (22) and/or the second plug-in unit (42) are able to pivot with a maximal pivot angle of 7° to 40°, preferably of 10° to 30° and particularly preferred of 10° to 20° out of the idle position in at least one direction.

4. The connection system as claimed in claim 2 or 3,
wherein the center of gravity (P₁) of the first plug-in unit (22) is spaced apart from the first pivot axis (S₁) with a 0.1 to 0.5 times, preferably with a 0.1 to 0.3 times, the maximal length of the first plug-in unit (22) measured along the first coupling axis (K₁).

5. The connection system as claimed in one of the preceding claims,
wherein at least one of the plug-in units (22, 24) comprises a delimited floating mounting arrangement.

6. The connection system as claimed in one of claims 2 to 5,
wherein when the first plug-in unit (22) is in the idle position the first coupling axis (K₁) is oriented parallel to the surface on which the towing vehicle (A) is standing.

7. The connection system as claimed in one of the preceding claims,
wherein the first plug-in unit (22) comprises at least one connector head (24) that comprises engagement means for engaging with the second plug-in unit (42),
wherein the first connector head (24) is pre-stressed by means of a restoring means (27) with respect to a first base part (26) of the first plug-in unit (22), wherein the restoring means (27) allows the first connector head (24) to be displaced in a resilient manner along the first coupling axis (K₁) relative to the first base part (26).

8. The connection system as claimed in one of the preceding claims,
wherein the second plug-in unit (42) is influenced by means of a second restoring means (47) with a restoring force which guides the second plug-in unit (42) into an idle position relative to the second carrier unit (41), wherein the second plug-in unit (42) can be pivoted in both pivot directions about the second pivot axis (S₂) against the respective restoring force of the second restoring element.

9. The connection system as claimed in one of the preceding claims,
wherein the first connection unit (2) is fixed below the coupling plate of a fifth-wheel coupling, and
wherein the second connection unit (4) is fixed directly or adjacent to a kingpin of the semi-trailer (B).

10. The connection system as claimed in one of the preceding claims,
wherein the second carrier unit (41) comprises a guiding region (46) that renders it possible for the second plug-in unit (42) to be displaced in a transverse manner with respect to the second pivot axis (S₂) along a guide path (F) and secures the second plug-in unit (42) against being displaced in a transverse manner with respect to the guide path (F).

11. The connection system as claimed in claim 10,
wherein the guiding region (46) is embodied as an elongated hole and the guide path (F) is a straight line.

12. The connection system as claimed in one of the preceding claims,
wherein an insertion aid (5) is fixed indirectly or directly to the first carrier unit (21) and/or to the second carrier unit (41) and said insertion aid pivots the respectively opposite-lying plug-in unit (42, 41) during the coupling procedure in such a manner that the coupling axes (K₁, K₂) move into collinearity with one another.

13. A connection unit (2, 4) for use on a fifth-wheel coupling,
comprising a carrier unit (21, 41) and a plug-in unit (22, 42),
wherein the carrier unit (21, 41) can be fixed or is fixed to a towing vehicle (A) or to a semi-trailer (B),
wherein the plug-in unit (22, 42) is mounted on the carrier unit (21, 41) in such a manner as to be able to pivot about a pivot axis (S₁, S₂) , wherein the plug-in unit (22, 42) comprises at least one connector head (24, 44) that is configured for coupling to a further plug-in unit and comprises at least one coupling region (25, 45) of an electrical line element and/or at least one fluid-conveying line,
wherein the coupling region (25, 45) has a constant cross section along a coupling axis (K₁, K₂),
**characterized in that** the coupling axis (K₁, K₂) is perpendicular with respect to the pivot axis (S₁, S₂)
and wherein the plug-in unit (22, 24) is fixed to the carrier unit (21, 41) in such a manner that the coupling axis (K₁, K₂) intersects the pivot axis (S₁, S₂).

14. The connection unit (2, 4) as claimed in claim 13,
wherein the connector head (24) is pre-stressed with respect to a base part (26) of the first plug-in unit (22) by means of a first restoring means (27), wherein the first restoring means (27) allows the connector head (24) to be displaced in a resilient manner along the first coupling axis (K₁) relative to the first base part (26).

15. The connection unit (2, 4) as claimed in one of claims 13 or 14,
wherein a stop (6) is provided on the carrier unit (21, 41),
wherein in its idle position the plug-in unit (22, 42) lies against the stop (6).

## Revendications

1. Système de liaison à utiliser sur une sellette d'attelage,
comprenant une première unité de liaison (2) destinée à être immobilisée sur un véhicule tracteur (A) et une seconde unité de liaison (4) destinée à être immobilisée sur une semi-remorque (B),
dans lequel
la première unité de liaison (2) comprend une première unité de support (21) et une première unité d'enfichage (22) avec un premier axe de couplage (K₁),
la première unité d'enfichage (22) est montée sur la première unité de support (21) de manière à pouvoir pivoter autour d'un premier axe de pivotement (S₁),
la seconde unité de liaison (4) comprend une seconde unité de support (41) et une seconde unité d'enfichage (42) avec un second axe de couplage (K₂),
la seconde unité d'enfichage (42) est montée sur la seconde unité de support (41) de manière à pouvoir pivoter autour d'un second axe de pivotement (S₂),
les première et seconde unités d'enfichage (22, 42) présentent chacune au moins une zone de couplage (25, 45) d'un élément de ligne électrique et/ou d'au moins une conduite de transmission de fluide,
**caractérisé en ce que**
la seconde unité de liaison (4) est montée sur la semi-remorque de manière à pouvoir pivoter autour d'un troisième axe de pivotement (S₃) de telle sorte qu'elle peut être amenée dans une position de couplage, et, dans la position de couplage de la seconde unité de liaison (4), le second axe de pivotement (S₂) est parallèle au premier axe de pivotement (S₁),
le premier axe de couplage (K₁) est orienté de manière sensiblement colinéaire par rapport au second axe de couplage (K₂) lorsque les première et seconde unités de liaison (22, 42) sont dans la position de couplage.

2. Système de liaison selon la revendication 1,
dans lequel la première unité d'enfichage (22) présente une position de repos,
un moyen de rappel agit sur la première unité d'enfichage (22), et/ou le centre de gravité (P₁) de la première unité d'enfichage (22) est espacé du premier axe de pivotement (S₁) de telle sorte qu'une force de rappel menant à la position de repos est appliquée à la première unité d'enfichage (22).

3. Système de liaison selon la revendication 2,
dans lequel la seconde unité d'enfichage (42) présente une position de repos,
la première unité d'enfichage (22) et/ou la seconde unité d'enfichage (42) peuvent être pivotées à partir de la position de repos dans au moins une direction avec un angle de pivotement maximal de 7° à 40°, de préférence de 10° à 30° et de manière particulièrement préférée de 10° à 20°.

4. Système de liaison selon la revendication 2 ou 3,
dans lequel le centre de gravité (P₁) de la première unité d'enfichage (22) est espacé du premier axe de pivotement (S₁) de 0,1 à 0,5 fois, de préférence de 0,1 à 0,3 fois, la longueur maximale de la première unité d'enfichage (22), mesurée le long du premier axe de couplage (K₁).

5. Système de liaison selon l'une des revendications précédentes,
dans lequel l'une au moins des unités d'enfichage (22, 42) présente un palier à flottement limité.

6. Système de liaison selon l'une des revendications 2 à 5,
dans lequel, dans la position de repos de la première unité d'enfichage (22), le premier axe de couplage (K₁) est orienté parallèlement à la surface d'appui du véhicule tracteur (A).

7. Système de liaison selon l'une des revendications précédentes,
dans lequel la première unité d'enfichage (22) comprend au moins une première tête d'enfichage (24) qui comprend des moyens d'engagement pour s'engager avec la seconde unité d'enfichage (42),
la première tête d'enfichage (24) est précontrainte par rapport à une première partie de base (26) de la première unité d'enfichage (22) à l'aide d'un moyen de rappel (27),
le moyen de rappel (27) permet un déplacement élastique de la première tête d'enfichage (24) par rapport à la première partie de base (26) le long du premier axe de couplage (K₁).

8. Système de liaison selon l'une des revendications précédentes,
dans lequel la seconde unité d'enfichage (42) est sollicitée par un second moyen de rappel (47) avec une force de rappel qui amène la seconde unité d'enfichage (42) dans une position de repos par rapport à la seconde unité de support (41),
la seconde unité d'enfichage (42) peut pivoter dans les deux directions de pivotement autour du second axe de pivotement (S2) à l'encontre de la force de rappel respective du second élément de rappel.

9. Système de liaison selon l'une des revendications précédentes,
dans lequel la première unité de liaison (2) est immobilisée en dessous du plateau d'attelage d'une sellette d'attelage, et
la seconde unité de liaison (4) est immobilisée directement ou de manière adjacente à un pivot central d'attelage de la semi-remorque (B).

10. Système de liaison selon l'une des revendications précédentes,
dans lequel la seconde unité de support (41) présente une zone de guidage (46) qui permet à la seconde unité d'enfichage (42) de se déplacer transversalement au second axe de pivotement (S₂) le long d'une trajectoire de guidage (F) et qui bloque la seconde unité d'enfichage (42) à l'encontre d'un déplacement transversalement à la trajectoire de guidage (F).

11. Système de liaison selon la revendication 10,
dans lequel la zone de guidage (46) est réalisée sous forme de trou oblong, et la trajectoire de guidage (F) est une droite.

12. Système de liaison selon l'une des revendications précédentes,
dans lequel un moyen d'aide à l'insertion (5) est immobilisé directement ou indirectement sur la première unité de support (21) et/ou sur la seconde unité de support (41) et fait pivoter l'unité d'enfichage (42, 41) respectivement opposée pendant l'opération de couplage de telle sorte que les axes de couplage (K₁, K₂) viennent en configuration colinéaire l'un par rapport à l'autre.

13. Unité de liaison (2, 4) destinée à être utilisée sur une sellette d'attelage, comprenant une unité de support (21, 41) et une unité d'enfichage (22, 42), dans laquelle
l'unité de support (21, 41) peut être immobilisée ou est immobilisée sur un véhicule tracteur (A) ou sur une semi-remorque (B),
l'unité d'enfichage (22, 42) est montée sur l'unité de support (21, 41) de manière à pouvoir pivoter autour d'un axe de pivotement (S₁, S₂),
la première unité d'enfichage (22, 42) comprend au moins une première tête d'enfichage (24, 44) conçue pour être couplée à une autre unité d'enfichage et comprenant au moins une zone de couplage (25, 45) d'un élément de ligne électrique et/ou d'une conduite de transmission de fluide,
la zone de couplage (25, 45) présente une section transversale constante le long d'un axe de couplage (K₁, K₂),
**caractérisée en ce que**
l'axe de couplage (K₁, K₂) est perpendiculaire à l'axe de pivotement (S1, S2), et
l'unité d'enfichage (22, 42) est immobilisée sur l'unité de support (21, 41) de telle sorte que l'axe de couplage (K₁, K₂) recoupe l'axe de pivotement (S₁, S₂).

14. Unité de liaison (2, 4) selon la revendication 13,
dans laquelle la tête d'enfichage (24) est précontrainte par rapport à une partie de base (26) de l'unité d'enfichage (22) à l'aide d'un premier moyen de rappel (27),
le premier moyen de rappel (27) permet un déplacement élastique de la tête d'enfichage (24) par rapport à la première partie de base (26) le long de l'axe de couplage (K₁).

15. Unité de liaison (2, 4) selon l'une des revendications 13 ou 14,
dans laquelle une butée (6) est prévue sur l'unité de support (21, 41),
dans sa position de repos, l'unité d'enfichage (22, 42) s'appuie contre la butée (6).
